# EUROPEAN PATENT SPECIFICATION

(11) **EP 1 267 049 B1**
(45) Date of publication and mention of the grant of the patent: **01.09.2004**
(21) Application number: 01830379.2
(22) Date of filing: 11.06.2001
(51) Int. Cl.: F01N 7/18, F16L 23/18, F16J 15/12

(54) **Improved toroidal gasket for exhaust pipes**
Verbesserte torusförmige Dichtung für Abgasleitungen
Joint toroidal amélioré pour tuyaux d'échappement

(43) Date of publication of application: 18.12.2002
(73) Proprietor: FEDERAL-MOGUL OPERATIONS ITALY S.r.l., 12084 Mondovi (IT)
(72) Inventor: Crestini, Paolo, 10137 Torino (IT); Rowinski, Paolo, 10125 Torino (IT)
(74) Representative: Spandonari, Carlo, Dr. Ing.

(56) References cited:
- EP-A- 0 242 868
- EP-A- 0 387 652
- EP-A- 0 654 626
- US-A- 6 015 152
- PATENT ABSTRACTS OF JAPAN vol. 1996, no. 04, 30 April 1996 (1996-04-30) & JP 07 317976 A (CALSONIC CORP), 8 December 1995 (1995-12-08)

## Description

This invention is concerned with an improved toroidal gasket for flanged exhaust pipes, particularly for exhaust pipes of internal-combustion engines.

In recent years, as catalyzer devices have been applied in the automobile field, sealing gaskets have been used with increasing importance in the joints between the pipes which build up the exhaust system of internal-combustion engines, in order to minimize leaking of the gases to the atmosphere before the gases have gone through the catalyzer.

Moreover, the requirement for a tight sealing in exhaust pipes has recently become even more stringent as Exhaust On-Board Diagnostics (EOBD) has been introduced, whereby probes and sensors are used whose proper operation is negatively affected by gas leaks in the pipes.

The admitted leak in the flange joints between pipes is now in the range 0.1 l/min to 3 l/min, depending on whether the installation is new or has served for a significant period, and whether the sealing flange belongs to the manifold or to the catalyzer.

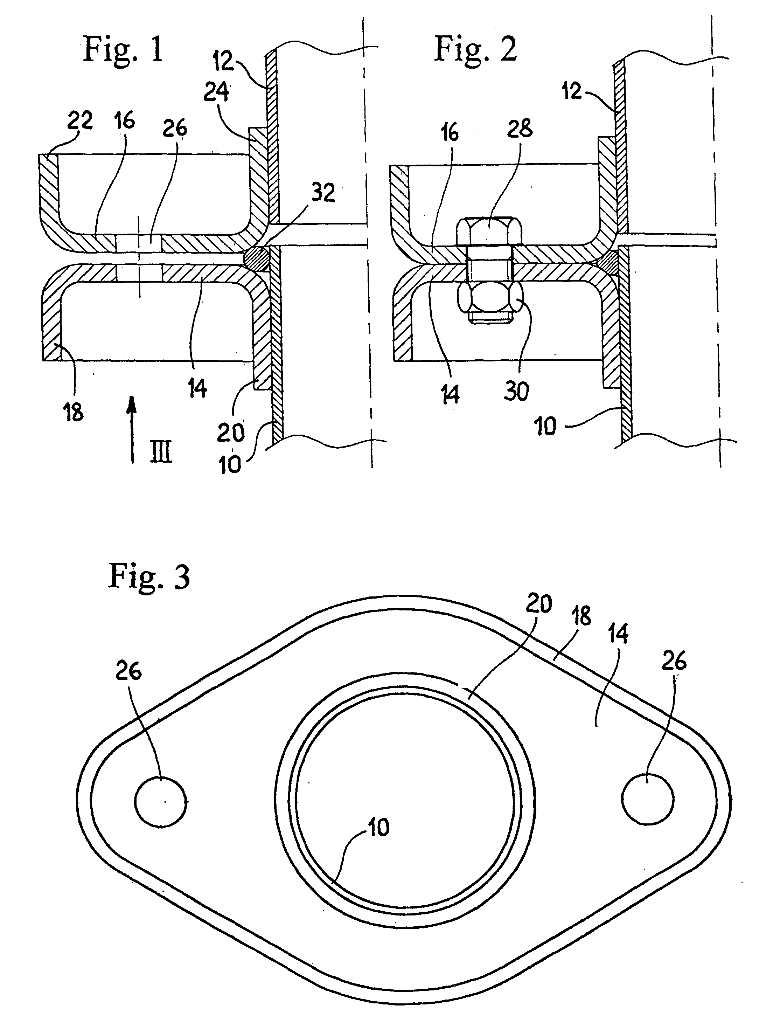

The above requirements have been met by seeking innovative approaches, which have led to the development of a special toroidal gasket, shown on Fig. 1, and comprising a ring-shaped member of a refractory material, which is encapsulated in a toroidally folded metal sheet, such as stainless or zinc-plated steel, and having a thickness of 0.2 to 0.25 mm.

The refractory material of the encapsulated ring-shaped member typically is a ceramic, or an aramidic fiber, or graphite, possibly reinforced with metal inserts. Ceramic has the advantage of being an inert, i.e. non-oxydizable, material, but has the drawback of having no springback. On the other hand, graphite has a good springback and should therefore be preferred, although it should be encapsulated in a way that it is protected from the external oxydizing atmosphere.

Although this approach has turned out to be quite effective from an operational standpoint, since it has a good compliance at low loads as well as a substantial stability of its mechanical characteristics over a range of operative temperatures, toroidal gaskets do raise a few problems, which can be appreciated if one considers the assembly operations.

During assembly, a gasket is placed around a section of pipe projecting from the contact side of one of the flanges, so that, when the flanges are joined, the gasket will be received in a recess defined between the radiuses of the contact sides of the flanges and the internal cylindrical surfaces of the pipe sections at the axial ends of the pipes that are being joined.

However, during original assembly or during replacement, the gasket is liable to drop out from the pipe, thus giving rise to an inconvenient working condition for the operator, the latter being often constrained to perform such steps in an uncomfortable position.

Another drawback of the prior art is that there is no way to check that the gasket is in place after the flanges have been joined. Where a doubt should arise that the gasket has been left out, the only recourse is to repeat the assembly from the start and insert a fresh gasket. If it is desired to check that the assembly of the exhaust system is correct, time has to be wasted in the disassembly of the flanges.

Document EP 0 659 626 A1 discloses a gasket comprising a folded metal sheet partly enveloping a ring, and extending outwardly into two wings provided with bolt holes.

The main object of this invention is therefore to avoid the above drawbacks by providing an improved toroidal gasket for flanged pipes so that it can be securely placed in position on the flange without risking that it drops out during the assembly steps, while maintaining the operative features of the prior gaskets.

Within the scope of the above object, a more particular object of the invention is to provide an improved gasket so that its presence between the flanges can be checked after the flanges are assembled together.

Another object is to provide the above gasket so that it can be directly substituted in lieu of a conventional gasket with no need to adapt the flanges or to alter their size.

Still another object of the invention is to provide the above gasket so that it can be manufactured easily and unexpensively.

A further object of the invention is to provide the above gasket so that it can be manufactured by known processes and equipment.

The above and other objects and advantages, such as will appear below, are achieved with an improved toroidal gasket for exhaust pipes having the features set out in claim 1, whereas the dependent claims set out other advantageous features.

The invention will now be disclosed in more detail with reference to a preferred, though not unique, embodiment, shown by way of illustrative and non-limiting example in the attached drawings, wherein:
Fig. 1 is a view in longitudinal cross-section of a conventional toroidal gasket in an initial step of its assembly between two flanged pipes;
Fig. 2 is a view similar to Fig. 1, in a final step of its assembly;
Fig. 3 is a view in transverse cross-section in the direction of arrow III on Fig. 1;
Fig. 4 is a perspective view, on an enlarged scale, of an improved toroidal gasket according to the invention;
Fig. 5 is a partial view in cross-section of a foil which is part of the gasket of Fig. 4;
Fig. 6 is a view in an enlarged cross-section of a detail of the gasket of Fig. 4;
Fig. 7 is a view in longitudinal cross-section of a toroidal gasket according to the invention, in an initial step of its assembly between two flanged pipes; and
Fig. 8 is a view similar to Fig. 7, in a final step of its assembly.

With reference to Figures 1 and 2, two metal-sheet pipes 10 and 12, which are inteded to be joined together are provided with respective, identical flanges 14 and 16. Each of the flanges is made of thick drawn metal-plate and has square rims 18, 20 and 22, 24. Thea flanges are respectively welded, as known per se, to the ends of the two pipes, whereby flange 14 projecting beyond the edge of the pipe, while flange 16 is set back. The flanges have two or more bores such as 26, in which respective clamping bolts 28 are received, which are tightened by means of respective nuts 30.

As shown on Fig. 1, a conventional toroidal gasket 32 comprises, by way of example, a ring of reinforced graphite which is encapsulated in a toroidally folded metal sheet with overlapping edges. Gasket 32 is placed within an annular recess defined by the edge of pipe 10 and the adjacent fillet area of flange 14, and pipe 12 is then brought near frontally. Bolts 28 are tightened until a strong contact is made between flanges 14 and 16, so that gasket 32 is clamped and deformed between the external cylindrical surface of pipe 10 and the adjacent fillets of both flanges 14 and 16, as is apparent on Fig. 2.

The person skilled in the art will appreciate that, where a plurality of pipes are assembled in mass-production along an assembly line, a gasket placed in position against the flange of a pipe is liable to accidentally shift or drop out, without this fact being noticed by the personnel, so that the gasket is missing in the joint. This circumstance is all the more serious because it is no longer possible to visually check for a gasket in the completed assembly.

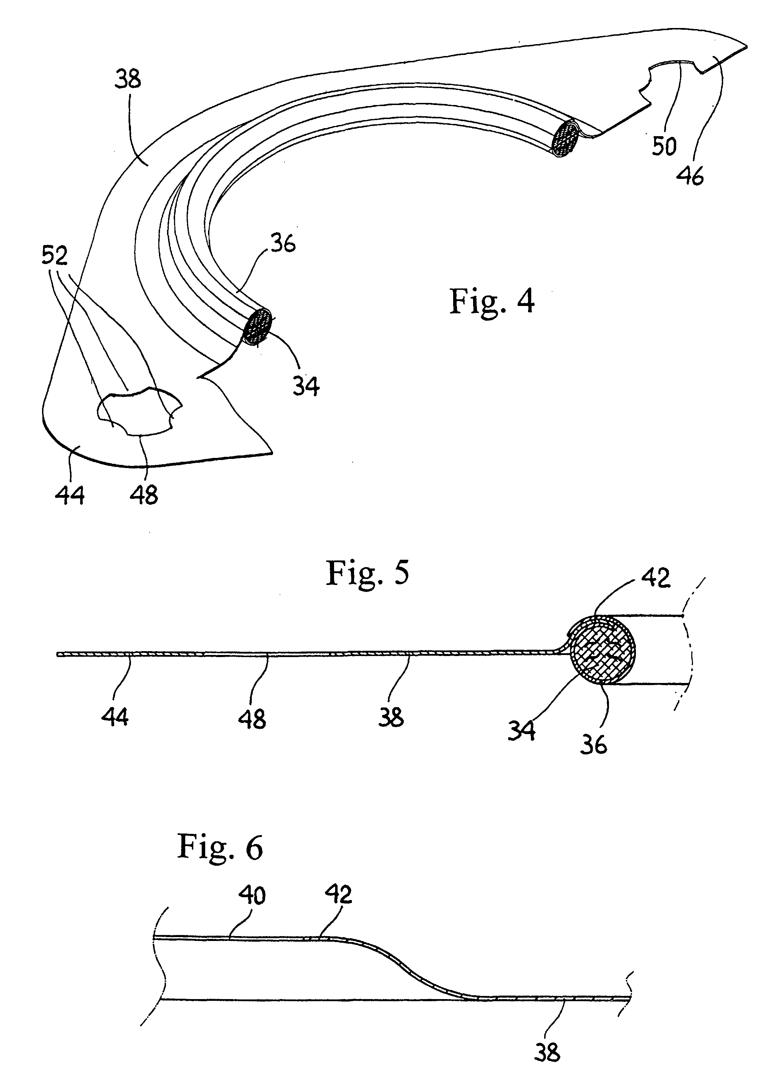

With reference to Figs. 4 to 6, a toroidal gasket according to the invention also comprises a ring 34 of reinforced graphite, which is encapsulated in a metal sheet 36, say of stainless or galvanized steel, and toroidally folded with overlapping edges. The gasket of the invention, however, further comprises a substantially oval-shaped foil 38, also of stainless or zinc-plated or aluminium-plated steel. Foil 38 has a central bore 40, having a diameter slightly smaller than the outside diameter of the ring, whose rim 42 is sandwiched between edges 44, 46 of metal sheet 36, before they are swaged, so that rim 42 is clamped between the edges.

Foil 38 has two wings 44, 46, extending radially in a plane at right angles to the central axis of the gasket, and is slightly drawn so that the plane of wings 44, 46 coincides with the middle plane of the gasket. Both wings 44, 46 have respective punched holes 48, 50, coinciding with the positions of bores 26 in the flanges, when the gasket is placed in position. Each hole 48, 50 has a serrated profile defining three teeth such as 52, which will interfere with the threads of the bolt passing through the associated bore.

With the above arrangement, when the gasket is placed on the pipe similarly to the conventional toroidal gasket of Fig. 1, while bolts 28 are inserted in bores 26 of the flange and consequently also through holes 48 and 50 in foil 38, both the gasket and the bolts 28 are stably hooked and will not become free of their respective seats, unless a strong and positive removal action is applied.

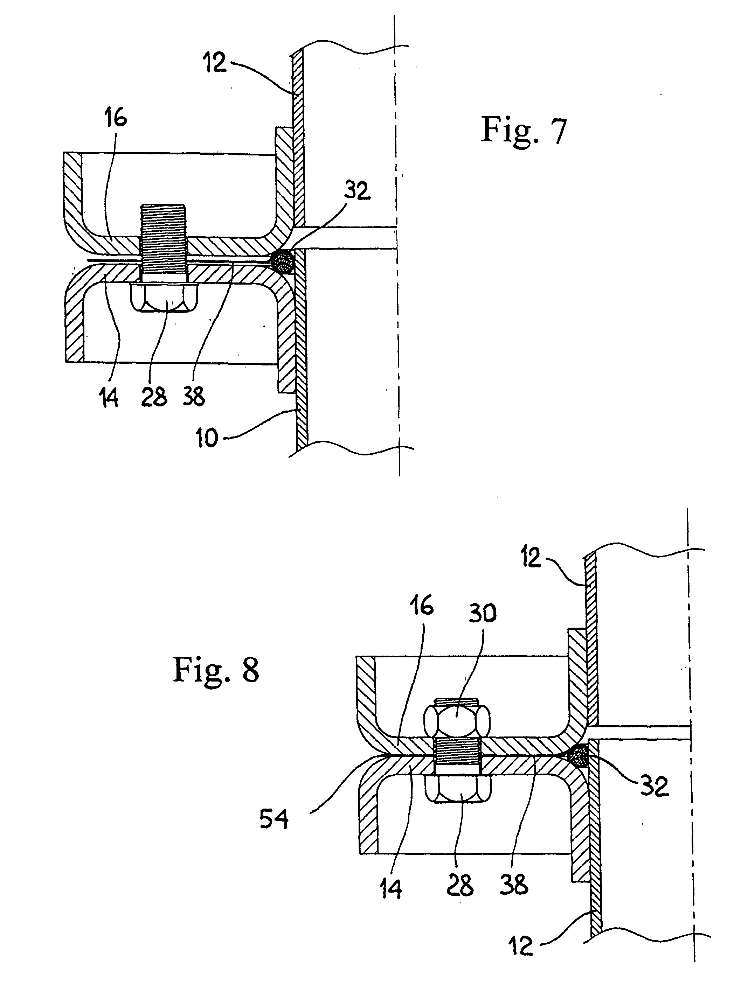

As shown on Figs. 7 and 8, both pipes 10 and 12 are then brought together and the flanges are clamped by means of the bolts, the result being identical to the conventional gasket. It should be noted that, since the foil's internal rim is clamped between the overlapped edges of the folded metal sheet at the flange pressure area, the thickness of the foil between the contact faces of the flanges is automatically compensated and causes no change to the compression forces and to the deformation of the gasket of the invention with respect to a conventional gasket.

As shown on Fig. 8, preferably one or both wings of foil 38 are shaped so that they will project outside the flanges when the gasket is assembled, in form of a tab 54, so that it can be checked whether the gasket has in fact been inserted between the flanges, even after the joint is made, by checking whether the signaling tab is visible. Tab 54 can be made larger than shown on Fig. 8, and can be provided with identification marks.

A person skilled in the art will appreciate that the above described gasket can be manufactured by processes and equipment common in the art, merely by adding a step consisting in placing the foil before swaging the edges of the encapsulated sheet, so that the manufacturing cost of the gasket is not significantly increased.

## Claims

1. A toroidal gasket (32) for exhaust pipes, (10,12) to be inserted between two flanges (14,16) connected to the axial ends of two pipes (10,12) to be joined, comprising a ring (34) of refractory material that is encapsulated in a toroidally folded metal sheet (36) with overlapping edges, **characterized in that** it further comprises a foil (38) having a circular aperture (40) whose rim ( 42) is clamped between said overlapping edges and having at least a wing (44) extending radially in a plane at right angles to the gasket axis and provided with means (48, 52) for hooking on one of said flanges. (14,16)

2. The gasket of claim 1, **characterized in that** the foil (38) is drawn in the annular area between said clamped rim (42) and said wing (44), whereby the plane of the wing coincides with the middle plane of the encapsulated ring (34).

3. The gasket of claim 1 or 2, **characterized in that** said wing ( 44) has a hole placed to coincide with a clamping bore (26) in the flange (14,16) when the gasket is placed on the pipe, (10,12) for hooking on a bolt (28) going through the clamping bore (26) in the flange (14,16).

4. The gasket of claim 3, **characterized in that** said hole (48) in said wing (44) has at least one tooth (52) extending inward and axially snap-engageable with the threads of a clamping bolt (28) going through the flange (14,16).

5. The gasket of claim 4, **characterized in that** the hooking hole (48) in said wing (44) has three of said teeth (52).

6. The gasket of any of the preceding claims, **characterized in that** said wing (48) is shaped to project partially outside the contact area between the flanges (14,16) in order to be visible from outside when the flanges (14,16) are joined.

7. The gasket of any of claims 1 to 6, **characterized in that** it has two of said wings (44, 46).

8. The gasket of any of the preceding claims, **characterized in that** said refractory material is graphite reinforced with an internal metal insert.

## Patentansprüche

1. Torusförmige Dichtung (32) für Abgasleitungen (10, 12), die zwischen zwei Flanschen (14, 16) einzusetzen ist, welche mit den axialen Enden zweier zu verbindender Leitungen (10, 12) verbunden sind, mit einem Ring (34) aus feuerfestem Material, der in einem torusförmig gefalteten Metallblech (36) mit überlappenden Kanten gekapselt ist, **dadurch gekennzeichnet, dass** sie zudem eine Folie (38) mit einer kreisförmigen Öffnung (40), deren Rand (42) zwischen die genannten überlappenden Kanten geklemmt ist, und zumindest einem Flügel (44) aufweist, der sich radial in eine Ebene im rechten Winkel zur Dichtungsachse erstreckt und mit Mitteln (48, 52) ausgestattet ist, um an einem der genannten Flansche (14, 16) festzuhaken.

2. Dichtung nach Anspruch 1, **dadurch gekennzeichnet, dass** die Folie (38) in den ringförmigen Bereich zwischen dem genannten eingeklemmten Rand (42) und dem genannten Flügel (44) gezogen ist, wodurch die Ebene des Flügels mit der mittleren Ebene des gekapselten Rings (34) zusammenfällt.

3. Dichtung nach Anspruch 1 oder 2, **dadurch gekennzeichnet, dass** der genannte Flügel (44) ein Loch hat, dass angeordnet ist, um mit einer Klemmbohrung (26) im Flansch (14, 16) zusammenzufallen, wenn die Dichtung auf der Leitung (10, 12) angeordnet ist, um an einem Bolzen (28) festzuhaken, der durch die Klemmbohrung (26) im Flansch (14, 16) durchgeht.

4. Dichtung nach Anspruch 3, **dadurch gekennzeichnet, dass** das genannte Loch (48) im genannten Flügel (44) mindestens einen Zahn (52) hat, der sich nach innen erstreckt und mit dem Gewinde eines Klemmbolzens (28) axial einschnappbar ist, der durch den Flansch (14, 16) geht.

5. Dichtung nach Anspruch 4, **dadurch gekennzeichnet, dass** das Festhakloch (48) im genannten Flügel (44) drei der genannten Zähne (52) hat.

6. Dichtung nach einem der vorhergehenden Ansprüche, **dadurch gekennzeichnet, dass** der genannte Flügel (48) so geformt ist, dass er sich teilweise aus dem Kontaktbereich zwischen den Flanschen (14, 16) erstreckt, um von außen sichtbar zu sein, wenn die Flansche (14, 16) verbunden werden.

7. Dichtung nach einem der Ansprüche 1 bis 6, **dadurch gekennzeichnet, dass** sie zwei der genannten Flügel (44, 46) hat.

8. Dichtung nach einem der vorhergehenden Ansprüche, **dadurch gekennzeichnet, dass** das feuerfeste Material mit einem inneren Metalleinsatz Graphitverstärkt ist.

## Revendications

1. Joint torique (32) pour des tuyaux d'échappement (40, 12) à insérer entre deux brides (14, 16) raccordées aux extrémités axiales de deux tuyaux (19, 12) devant être joints, comprenant une bague (34) en matériau réfractaire qui est encapsulée dans une feuille de métal pliée de manière toroïdale (36) comportant des bords qui se chevauchent, **caractérisé en ce qu'**il comprend, en outre, une feuille (38) comportant une ouverture circulaire (40) dont le bord (42) est serré entre lesdits bords qui se chevauchent et comportant au moins une aile (44) s'étendant radialement dans un plan formant un angle droit avec l'axe du joint et pourvue de moyens (48, 52) destinés à s'accrocher sur l'une desdites brides (14, 16).

2. Joint selon la revendication 1, **caractérisé en ce que** la feuille (38) est étirée dans la zone annulaire comprise entre ledit bord serré (42) et ladite aile (44), moyennant quoi le plan de l'aile coincide avec le plan central de la bague encapsulée (34).

3. Joint selon la revendication 1 ou 2, **caractérisé en ce que** ladite aile (44) comporte un trou placé de manière à coïncider avec un alésage de serrage (26) dans la bride (14, 16) lorsque le joint est placé sur le tuyau (10, 12) pour s'accrocher sur un boulon (28) traversant l'alésage de serrage (20) dans la bride (14, 16).

4. Joint selon la revendication 4, **caractérisé en ce que** ledit trou (48) dans ladite aile (44) comporté au moins une dent (52) s'étendant vers l'intérieur et pouvant être mise en prise par pression axialement avec les filets d'un boulon de serrage (28) traversant la bride (14, 16).

5. Joint selon la revendication 5, **caractérisé en ce que** le trou d'accrochage (48) dans ladite aile (44) comporte trois desdites dents (52).

6. Joint selon l'une quelconque des revendications précédentes, **caractérisé en ce que** ladite aile (48) est formée de manière à faire saillie partiellement à l'extérieur de la zone de contact entre les brides (14, 16) afin d'être visible de l'extérieur lorsque les brides (14, 16) sont jointes.

7. Joint selon l'une quelconque des revendications 1 à 7, **caractérisé en ce qu'**il comporte deux desdites ailes (44, 46).

8. Joint selon l'une quelconque des revendications précédentes, **caractérisé en ce que** ledit matériau réfractaire consiste en du graphite renforcé par un insert métallique interne.
